# EUROPEAN PATENT APPLICATION

(11) **EP 0 931 971 A1**
(43) Date of publication of application: **28.07.1999**
(21) Application number: 98201809.5
(22) Date of filing: 30.05.1998
(51) Int. Cl.: F16L 59/04, F01N 7/14, E04B 1/74, C04B 14/38

(54) **Sound proofing and insulating material, process for its production and articles using said material**

(30) Priority: 22.01.1998 IT MI980102
(71) Applicant: Nuova Temas S.r.l., 22070 Bregnano, Como (IT)
(72) Inventor: Rampoldi, Fernando, 22070 Bregnano (Como) (IT)
(74) Representative: Riccardi, Sergio

(57) **Abstract**

A deadening and insulating material on the basis of mineral wool, consisting of individual elements preferably of an approximate spherical shape, allowing an automatic filling of the space constituting the acoustic barrier of industrial articles such as mufflers for motor vehicles and insulating panels, as well as the process of production of said individual elements in the form of pellets, with great environmental and economical advantages, are disclosed.

## Description

The present invention relates to a deadening and insulating material of novel conception, a process adapted to produce said material and articles utilizing said material to make an acoustic and thermal barrier.

It is known to use fibrous materials of mineral origin in various industrial fields. These fibrous materials mainly comprise steel wool, preferably stainless steel wool for protection purposes, rock wool and glass wool for deadening and insulating purposes.

These mineral wools are produced by reducing the mineral to fibers, spinning, rolling and baking it, generally after impregnation with resins, generally of the phenolic group. In this way a continuous band or mat is obtained, which is then wound in coils, rolls or skeins that are supplied to users who utilize said wools for a number of industrial articles.

An industrial sector where mineral wools are largely used is the automotive industry, more particularly for the production of the mufflers for the exhaust systems of motor vehicles. Indeed between the barrel or outer envelope and the plug or inner tube, the muffler is filled with a compact layer or packet of deadening material which is preformed or simply loaded leaving in the middle a through hole for the plug, bounded by a protection jacket of steel wool, while the deadening packet is made of rock wool or glass wool.

The production of such packet is very awkward and expensive. Indeed it is necessary to prepare molds having the shape and sizes of the muffler, to fill manually the molds with the material cut from the coil or roll supplied by the manufacturer of the mineral fibers, impregnate the material and bake it. Manufacturers of mufflers practically have to equip a special section for this operation or to entrust it to contractors with all the drawbacks of transportation, storage and similar costs. Moreover the manual manipulation of the mineral fibers is very awkward and full of health hazards for the workers and for environmental pollution so that it can be said that it is a very hazardous operation.

Another very serious drawback of this kind of production of the packets of deadening material is that one must keep molds for every type of muffler. Now it is known that each model of motor vehicle has a different type of muffler as to shape and size, and the muffler often is modified during the production life of a model, so that there are even different types of mufflers according to the year of production of the same model of motor vehicle. Therefore one can easily understand that the manufacturers of mufflers must keep for decades a huge number of molds and have in stock a quantity of all the various kinds of packets of deadening material, with a very high cost, for a production that in the course of years becomes lower and lower while the number of the older circulating vehicles diminishes progressively.

This still unresolved problem is very felt in a special manner in the above mentioned sector of the producers of mufflers, but exists in a general way in all those fields where preformed or shaped layers of mineral wools are used, with the relevant problems of production, storage, stockage for long periods of time.

The problem is now solved in a very brilliant and surprisingly simple and efficient way by the present invention which is based on a revolutionary conception for the mineral wools of deadening devices.

The deadening and insulating material according to the present invention is defined in Claim 1 and further features of the material are recited in the dependent Claims 2-5. The process for its production is set forth in Claim 6 and 7. Use of the material and articles made thereby are recited in Claims 8-12.

As a matter of fact the conception that is the basis of the present invention is to use a plurality of small individual elements instead of a continuous and compact layer. In this way it is no more necessary to make and store the various types of deadening packets and the manufacturer of mufflers uses a stock of these individual elements that will be filled in the various types of mufflers, irrespective of their shape and size. Moreover the presence of void microspaces among the individual elements increases their reflecting power absorbing the acoustic waves, so that a higher deadening effect is obtained.

Finally there is another decisive advantage of the present invention, namely the complete absence of human manipulation of the mineral wool with the corresponding hazards, as it is easy to devise an automated system integrated in the muffler production line, for filling the muffler with said individual elements.

Such individual elements are preferably of an approximately spherical shape and for this reason they will be simply referred to as "pellets" hereinafter, but this term should not be construed as limited to the spherical or ovoidal shape. The size of the pellets is not limited to a specific range but generally they could have a diameter or major dimension of 1-3 cm.

The production of the pellets does not pose particular problems and may be carried out by forming the pellets directly at the outlet of the equipment for producing the fibers or by breaking up into small pieces the already formed and impregnated band or mat and granulating the pellets which in both cases are then consolidated baking them in an oven. The pellets are then filled into bags and supplied to users.

Use of the pellets is extremely simple. Indeed the pellets can be introduced into the barrel of the muffler, where the plug and one of the end caps where previously assembled, either causing them to fall by gravity or pushing them inside the barrel for example by a blow of compressed air or even under vacuum. The pellets will be rather pressed so as to form a properly compact mass, although each pellet keeps its individual character allowing a greater splitting up of the sound waves with consequent increase in the number of refractions and reflections, namely an increase of the deadening power.

As briefly mentioned hereinbefore, the pellets of mineral fibers are adapted also for uses other than filling mufflers, such as filling deadening panels in constructions or industrial plants. As a mineral fiber suitable for the production of the pellets, first of all rock wool must be cited, but the pellets could be produced also with glass wool or other mineral fibers that would be found suitable for this purpose.

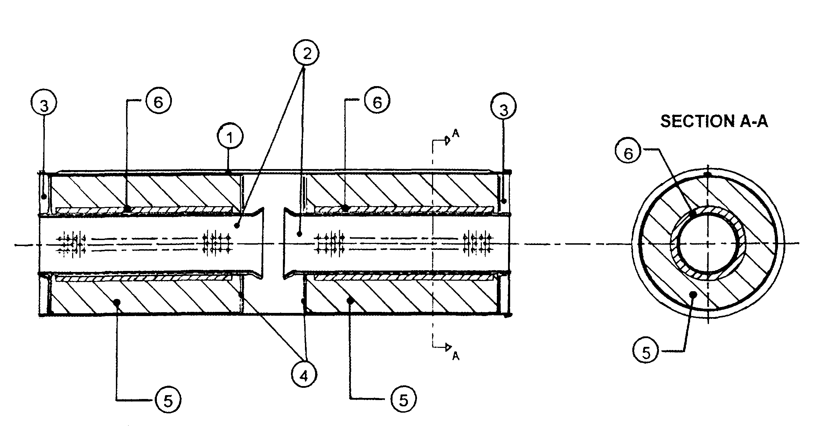

As a merely illustrative and non limiting example of the invention, the accompanying drawing shows a longitudinal and a cross-sectional view, respectively, of a conventional muffler with two deadening sections separated by a central gas expansion section, in which reference number 1 is the barrel or external envelope, 2 the plug or inner tube, 3 the end cap made of pressed sheet, 4 the central baffle of perforated pressed sheet, 5 the packet of deadening rock wool and 6 the protection sheath or jacket made of stainless steel wool. According to the present invention, the space in the muffler up to now filled with the compact packet 5 of rock wool or other mineral wool, is instead filled with said pellets of deadening material of mineral fibers.

Finally it is to be understood that many modifications and additions may be resorted to the essential features of the invention, without departing however from its spirit and object and/or without falling outside its scope, as defined in the appended claims.

## Claims

1. Deadening and insulating material consisting of mineral wools, characterized by comprising small individual elements adapted to fill the space provided for acoustic and thermal insulation of industrial articles.

2. Material according to Claim 1, characterized in that said individual elements of mineral wool have an approximately spherical shape like a pellet.

3. Material according to Claim 2, characterized in that said pellets of mineral wool have an approximate size of 1-3 cm.

4. Material according to any of Claims 1-3, characterized in that said mineral wool is rock wool.

5. Material according to any of Claims 1-3, characterized in that said mineral wool is glass wool.

6. Process for the production of the material according to one of more of the preceding claims, characterized in that the mineral fibers are formed into pellets directly at the outlet of the equipment producing the fibers.

7. Process for the production of the material according to one or more of Claims 1 to 5, characterized in that the mineral fibers are formed into pellets by granulating the band or mat of mineral fibers already formed and impregnated after the spinning step, and then said pellets are baked in an oven.

8. Articles provided with deadening layers consisting of the material according to one or more of Claims 1 to 5.

9. Use of the deadening and insulating material according to one or more of Claims 1 to 5, as a thermal and acoustic barrier for industrial articles, more particularly mufflers for motor vehicles and panels for construction and industrial plants.

10. Muffler for motor vehicles, characterized in that the filler of the barrel with deadening material consists of a plurality of individual elements or pellets as defined in Claims 1 to 5.

11. Deadening panels for construction and industrial plants, characterized in that their layer of acoustic barrier consists of a plurality of individual elements or pellets as defined in Claims 1 to 5.

12. Muffler for motor vehicles according to Claim 10, characterized in that filling of the barrel with the pellets is carried out on the production line in an automated way by feeding the pellets in-line.
